# EUROPÄISCHE PATENTANMELDUNG

(11) **EP 0 584 685 A2**
(43) Veröffentlichungstag der Anmeldung: **02.03.1994**
(21) Anmeldenummer: 93113071.0
(22) Anmeldetag: 16.08.1993
(51) Int. Cl.: B01J 19/10

(54) **Reaktor zum Durchführen von chemischen Reaktionen**

(30) Priorität: 28.08.1992 DE 4228618
(71) Anmelder: HOECHST AKTIENGESELLSCHAFT, D-65926 Frankfurt am Main (DE)
(72) Erfinder: Berger, Harald, Dr., D-65779 Kelkheim/Taunus (DE); Dragesser, Norbert, D-35796 Weinbach (DE); Heumüller, Rudolf, Dr., D-55296 Lörzweiler (DE); Schätzer, Erich, D-64625 Bensheim (DE); Wagner, Manfred, D-65719 Hofheim am Taunus (DE)

(57) **Zusammenfassung**

Bei dem Reaktor zum Durchführen chemischer Reaktionen mit Ultraschall sind am Boden (13) des Reaktors (10) mindestens drei Sonotroden (15) und am Mantel (14) mindestens sechs Sonotroden (15) angeordnet.

## Beschreibung

Die Erfindung betrifft einen Reaktor zum Durchführen von chemischen Reaktionen unter dem Einfluß von Ultraschall.

Reaktoren der genannten Art sind nach Steven V. Ley und Caroline M. R. Low, Ultrasound in Synthesis Springer-Verlag 1989, Seiten 18 bis 28 bekannt. Danach besteht der Reaktor aus einem mit Sonotroden versehen Gefäß, daß mit einem flüssigen Medium (z. B. Wasser) gefüllt ist, in das ein Reaktionsgefäß mit dem Reaktionsgemisch eingetaucht wird. Nachteilig bei diesem Reaktor ist, daß die akustische Leistung des flüssigen Mediums nicht regelbar ist und sich sowohl Intensität als auch Ultraschallfrequenz mit zunehmendem Gebrauch des flüssigen Mediums ändern. Außerdem wird der Ultraschall beim Durchgang durch das Medium so weit abgeschwächt, daß die akkustische Intensität im Reaktionsgefäß meist nur schwach über der unteren Effektgrenze liegt. Als kritisch erweist sich ebenfalls, daß die Reproduzierbarkeit der Reaktionsergebnisse stark abhängig von der Position des Reaktionsgefäßes im Bad und von der Füllstandshöhe des Reaktionsgemisches im Reaktionsgefäß ist.

Nach einer anderen Ausführungsform ist im Reaktionsgefäß eine hornförmige Sonotrode angeordnet, die in das Reaktionsgemisch eintaucht. Nachteilig ist hierbei, daß sich die Beschallung nur auf den unmittelbaren Bereich um das stabförmige Ende der Sonotrode konzentriert und der größte Teil des Reaktionsvolumens unbeschallt bleibt.

Nach einer weiteren Ausführungsform ist im Reaktionsgefäß eine Düse angeordnet, in die die Sonotrode in Form einer schwingenden Platte hineinragt. Das Reaktionsgemisch wird über die Düse auf die schwingende Platte gepumpt.

Dieser Reaktortyp eignet sich beschränkt für Reaktionen zwischen flüssigen Phasen. Reaktionen zwischen flüssigen und festen Phasen sind nicht möglich.

Hier will die Erfindung Abhilfe schaffen. Die Aufgabe wird durch einen Reaktor gelöst, der dadurch gekennzeichnet ist, daß am Boden des Reaktors mindestens drei Sonotroden und am Mantel des Reaktors mindestens sechs Sonotroden angeordnet sind.

Die Sonotroden können im Boden und im Mantel integriert und mit einer Haube versehen sein. Der Boden und der Mantel des Reaktors können doppelwandig ausgeführt sein. In einer alternativen Ausführung können am Boden des Reaktors mindestens fünf und am Mantel des Reaktors mindestens acht Sonotroden angeordnet sein.

Die Vorteile des erfindungsgemäßen Reaktors sind im wesentlichen darin zu sehen, das chemische Reaktionen mittels Ultraschall sowohl zwischen heterogenen Phasen als auch in homogener Phase, batchweise oder kontinuierlich bei verschiedenen Temperaturen sicher initiiert und durchgeführt werden können. Darüber hinaus läßt sich der Einfluß des Ultraschalls durch Regelung der akustischen Leistung variieren.

Im folgenden wird die Erfindung anhand von lediglich einen Ausführungsweg darstellender Zeichnung näher erläutert.

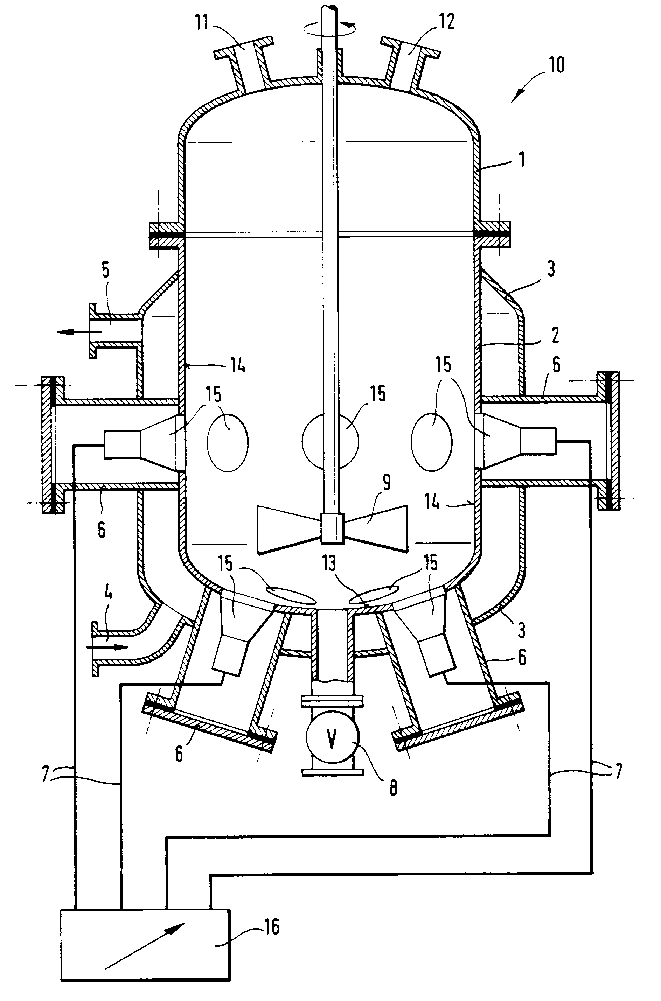

In der Figur ist ein Reaktor nach Art eines Rührkessels 10 mit Oberteil 1 und Unterteil 2 dargestellt. Das Oberteil 1 des Kessels 10 ist mit Füllstutzen 11 und 12 versehen. Das Unterteil 2, vorzugsweise aus Chemikalien beständigem Material, weist an seinem Boden 13 und seinem Mantel 14 elektromechanische Wandler (Sonotroden) 15 zur Übertragung von Ultraschall auf. Die Sonotroden 15 können durch Aufkleben auf den Boden und den Mantel befestigt sein oder aber im Boden und im Mantel integriert sein, das heißt eingeschweißt sein. Dabei ist die maximal erreichbare akustische Leistung des Reaktors von der Anzahl der angebrachten Sonotroden abhängig. Die Sonotroden 15 am Reaktorboden 13 und diejenigen am Reaktormantel 14 können gegebenenfalls unabhängig voneinander über Kabel 7 von einem regelbaren Ultraschallgenerator 16 angesteuert werden, wodurch die akustische Leistung variiert werden kann. Die Sonotroden 15 können gegen atmosphärische Einflüsse durch Hauben 6 abgeschirmt sein und die Hauben mit Schutzgas gespült werden. Ferner kann das Reaktorunterteil 13 ein Bodenauslaßventil 8 besitzen und mit einem Doppelmantel 3 versehen sein, durch den Kühl- oder Heizmedium gepumpt werden kann. Dabei ist auch zwischen den einzelnen Sonotroden 15 die Kühl- oder Heizwirkung gewährleistet. Desweiteren kann der Reaktor mit einem Rührwerk 9 versehen sein.

In dem beschriebenen Reaktor lassen sich in unproblematischer und sicherer Weise Reaktionen der anorganischen und organischen Synthese mit Ultraschall im technischen Maßstab durchführen. Es lassen sich Reaktionen sowohl in homogener flüssiger Phase als auch zwischen heterogenen Phasen (flüssig/fest und flüssig/flüssig) realisieren. Dabei können die Sonotroden einzeln oder als Gruppe am Kesselboden 13 und am Kesselmantel 14 unabhängig voneinander betrieben werden. Letzteres bietet den Vorteil, daß kleine Mengen Reaktionsgut zunächst über die Bodengruppen wirtschaftlich und effektiv beschallt werden können und bei größerem Volumeninhalt die Mantelgruppen zur Steigerung der Leistung zugeschaltet werden können. Durch Kapseln mit Hauben 6 der am Reaktor angebrachten Sonotroden und eventuellem Spülen der Hauben 6 mit Schutzgas ist der Betrieb des Reaktors auch in Ex-Zonen möglich.

Je nach Bedarf kann das Reaktionsgut während der Beschallung über den am Kesselunterteil 2 angebrachten Doppelmantel 3 mit Zulauf 4 und Ablauf 5 beheizt oder gekühlt werden. Reaktionen unter Rückflußbedingungen oder gleichzeigtigem Abdestillieren einer Komponente sind ebenfalls möglich. Über die Anschlüsse des Kesseloberteils 1 ist die Versorgung mit z. B. Reaktionskomponenten oder Schutzgas möglich. Am Boden 13 und am Mantel 14 des Reaktors 10 können dem Bedarf und der Reaktorgröße entsprechend beliebig viele Sonotroden 15 angebracht sein. Bei einem Nennvolumen des Reaktors von ca. 50 l haben sich fünf Sonotroden 15 am Boden 13 und acht Sonotroden 15 am Mantel 14 als ausreichend erwiesen.

## Patentansprüche

1. Reaktor zum Durchführen chemischer Reaktionen mit Ultraschall, dadurch gekennzeichnet, daß am Boden (13) des Reaktors (10) mindestens drei Sonotroden (15) und am Mantel (14) mindestens sechs Sonotroden (15) angeordnet sind.

2. Reaktor nach Anspruch 1, dadurch gekennzeichnet, daß die Sonotroden (15) im Boden (13) und im Mantel (14) integriert und jeweils mit einer Haube (6) versehen sind.

3. Reaktor nach Anspruch 1, dadurch gekennzeichnet, daß der Boden (13) und der Mantel (14) doppelwandig ausgeführt sind.

4. Reaktor nach Anspruch 1, dadurch gekennzeichnet, daß am Boden (13) mindestens fünf und am Mantel (14) mindestens acht Sonotroden (15) angeordnet sind.
